# EUROPÄISCHE PATENTSCHRIFT

(11) **EP 4 530 764 B1**
(45) Veröffentlichungstag und Bekanntmachung des Hinweises auf die Patenterteilung: **01.04.2026**
(21) Anmeldenummer: 23200351.7
(22) Anmeldetag: 28.09.2023
(51) Int. Cl.: G05B 19/042, G05B 9/02, G06F 1/14

(54) **VERFAHREN ZUM BETREIBEN EINER ZYKLUSORIENTIERTEN STEUERUNGS-SOFTWARE**
METHOD FOR OPERATING A CYCLE-ORIENTED CONTROL SOFTWARE
PROCÉDÉ DE FONCTIONNEMENT CYCLIQUE D'UN LOGICIEL DE COMMANDE

(43) Veröffentlichungstag der Anmeldung: 02.04.2025
(73) Patentinhaber: Siemens Aktiengesellschaft, 80333 München (DE)
(72) Erfinder: Hog, Ronny, 92245 Kümmersbruck (DE); Schweiger, Julia, 92242 Hirschau (DE); Schötz, Sebastian, 92256 Hahnbach (DE); Walter, Markus, 96050 Bamberg (DE)
(74) Vertreter: Siemens Patent Attorneys

(56) Entgegenhaltungen:
- EP-B1- 2 284 771
- DE-A1- 102018 120 347

## Beschreibung

Heute gängige Steuerungen basieren auf einer Hardwareplattform, einen speziellen elektronischen Unterbau, nämlich eine Speicherprogrammierbare Steuerung (SPS). Wenn neuerdings von virtuellen Steuerungen oder Softwaresteuerungen die Rede ist, so ist dafür ebenfalls eine Hardware zur Ausführung erforderlich, aber die Hardware kann jetzt komplett abstrahiert sein. Dies bedeutet, dass die ausgeführte Soft-SPS nicht mehr wissen muss, auf welchem Gerät sie läuft.

Diese Geräte können nach wie vor dedizierte Steuerungsgeräte sein, wie multifunktionale Steuerungsplattformen oder Industrie-PCs, oder aber Edge-Computing-Plattformen, diese sind immer häufiger in Steuerungsnetzwerken von Maschinen- und Anlagenbetreibern zu finden, oder es werden sogar Cloud-Computing-Plattformen genutzt. Entscheidend ist die Abstraktion der Hardware durch Container oder Hypervisor. Darauf wird die Soft-SPS mit Standardmitteln »deployed« beziehungsweise per Tool orchestriert - eine Installation wie bei der softwarebasierten Steuerung entfällt.

Die Erfindung liegt auf dem Fachgebiet von sicherheitsgerichteten Steuerungen, insbesondere als Software. Speicherprogrammierbare Steuerungen müssen gemäß den Anforderungen der Norm EN 61508 derart ausgestaltet sein, dass sie eine funktionale Sicherheit erfüllen. Bei sicherheitsbezogenen Systemen, wie speicherprogrammierbare Steuerungen für kritische Prozesse, die elektrische, elektronische oder program-mierbare elektronische Komponenten enthalten und deren Ausfall ein maßgebliches Risiko für Mensch oder Umwelt bedeutet, müssen diese für eine besondere Gewährleistung der Sicherheit ausgestaltet sein. Als Beispiele für Anwendungen, welche eine erhöhte Sicherheit erfordern, sind folgende zu nennen: Kernkraftwerke, Leittechnik für Systeme mit sicherheitstechnischer Bedeutung, Bahnanwendungen, Telekommunikationstechnik, Signaltechnik und Datenverarbeitungssysteme, chemische Prozesse, aber auch beispielsweise kleine Anlagen wie eine Stanze zum Ausstanzen von Blechteilen.

Bei aktuellen Sicherheitssteuerungen (z.B. SIMATIC S7-1511 F) muss beim Anlauf nach einem Netz aus/ein bzw. Stop/Run Übergang sichergestellt werden, dass immer mit den Initialwerten und nicht mit den Aktualwerten des letzten Sicherheitsprogramm-Zyklus (z.B. vor Netz aus) angelaufen wird (im weiteren als Kaltstart bezeichnet).

In der EP 2 284 771 B1 und in der EP 2 241 953 B1 wird beschrieben, dass in jedem Zyklus einer Sicherheitssteuerung eine sichere Zeit aus zwei Zeitgebern (Standard-Timer und Failsafe-Timer oder F-Timer) gebildet wird. Dies wird erreicht durch die Bildung der Zeitdifferenz zwischen zwei Zyklen (S-Diff und F-Diff) und anschließenden Vergleich der Zeitdifferenzen mit einer vorgegebenen Toleranz.

Die Erfindung betrifft ein Verfahren zum Betreiben einer zyklusorientierten Steuerungs-Software zur Steuerung eines Prozesses, wobei die Steuerungs-Software innerhalb einer Laufzeit-Umgebung auf einem Rechnersystem zum Ablauf gebracht wird, wobei zur Absicherung einer Systemzeit des Rechnersystems eine weitere von der Systemzeit unabhängige Sicherheitszeit in jedem Zyklus abgefragt wird, wobei eine erste Zeitdifferenz aus der Systemzeit des aktuellen Zyklus und der Systemzeit des Vorgänger Zyklus und eine zweite Zeitdifferenz aus der Sicherheitszeit des aktuellen Zyklus und der Sicherheitszeit des Vorgänger Zyklus gebildet wird und ein Vergleich der Zeitdifferenzen mit einer vorgegebenen Toleranz durchgeführt wird, und für den Fall, dass die Abweichung der Zeitdifferenzen die Toleranz übersteigt wird ein Fehlersignal generiert.

Es wurde also die verstrichene Zeit zwischen dem aktuellen und dem letzten Zyklus über die Zeitdifferenz beider Timer ermittelt.

Die Differenz des Standard Timer ergibt sich aus SDIFF = S_TIM - S_TIM_ALT und die
Differenz des F-Timer ergibt sich aus FDIFF = F_TIM_ALT - F_TIM, vorzugsweise kann hier mit einem Rückwärtszähler gearbeitet werden.

Bei Verwendung eines Vorwärtszähler kann auch die alte Zeit von der neuen Zeit abgezogen werden.

Anschließend wird geprüft, ob die ermittelten Differenzwerte im erlaubten Toleranzbereich liegen.

Bei den bisherigen Sicherheitssteuerungen war das Verhalten der beiden Zeitgeber im Zustand "Netz-Aus" bekannt, da sich beide Zeitgeber auf einem Gerät befanden und durch den Hersteller von Sicherheitssteuerungen definiert wurden.

Mit Einführung einer virtuellen Softwaresteuerung (Soft-PLC) wird die zweite Zeit von einer externen Zeitquelle geholt und weist somit ein nicht definiertes Verhalten im "Netz-Aus" auf.

Es ist eine Aufgabe der vorliegenden Erfindung die Sicherheit einer auch mit einer virtuellen Steuerung zu gewährleisten.

Die Aufgabe wird dadurch gelöst, dass bei einem Hochlauf der Laufzeit-Umgebung eine Zufallszahl erzeugt wird, diese Zufallszahl wird in einem Speicherbereich abgelegt und bei jeder weiteren Abfrage der Sicherheitszeit auf die abgefragte Sicherheitszeit aufaddiert, wobei zu Beginn eines neuen Zyklus in der Steuerungs-Software in einem Kontroll-Baustein die Abweichung der Zeitdifferenzen berechnet wird, dabei wird in jedem Zyklus von dem Kontroll-Baustein auf den Speicherbereich zugegriffen und vor der Berechnung der Zeitdifferenzen wird die Zufallszahl aus der Sicherheitszeit in dem Kontroll-Baustein wieder herausgerechnet, für den Fall dass ein neuer Hochlauf der Laufzeit-Umgebung erfolgt ist, wird dieses durch eine Überschreitung der Toleranz diagnostizierbar, denn die zweite Zeitdifferenz weist nun einen Versatz auf, welcher aus der Sicherheitszeit mit einer neuen Zufallszahl des aktuellen Zyklus und der Sicherheitszeit mit der alten Zufallszahl des Vorgänger Zyklus ergibt.

Nun hat man ein Verfahren, um zu erkennen, ob beim Anlauf nach einem Netz aus/ein sichergestellt ist, dass immer mit den Initialwerten und nicht mit den Aktualwerten des letzten Sicherheitsprogramm-Zyklus (z.B. vor Netz aus) angelaufen wird. Denn wenn das Netz ausfällt, fällt das Rechnersystem auch aus und bei Netzwiederkehr wird die Laufzeit-Umgebung erneut hochgefahren, zwar wird dadurch auch die Steuerungs-Software neu anlaufen, aber nun hat man eine Absicherung, dass im Sicherheitsprogramm der Kaltstart-Mechanismus auch ausgeführt wurde.

Wenn der Kaltstart-Mechanismus funktioniert, wird bei der Differenzbildung ab dem zweiten Zyklus die Zufallszahl herausgerechnet.

Sollte der Kaltstart-Mechanismus ausfallen, wird mit zwei unterschiedlichen Zufallszahlen im ersten Zyklus gerechnet (z.B. einmal mit der Zufallszahl vor "Netz-Aus" und einmal mit der neuen Zufallszahl nach "Netz-Ein") und somit die Abarbeitung des Sicherheitsprogramms gestoppt.

Die Steuerungs-Software wird als eine Sicherheitssteuerung mit einem Sicherheitsprogramm und einem Standard-Anwenderprogramm betrieben und ungewollte Beeinflussung des Sicherheitsprogramms können aufgedeckt werden.

Der Kaltstart-Mechanismus wird beim Anlauf der Sicherheitssteuerung nach einem Stromausfall am Rechnersystem durchgeführt, durch den Kaltstart-Mechanismus wird sichergestellt, dass immer mit Initialwerten und nicht mit Aktualwerten des letzten Zyklus angelaufen wird, wobei für den Fall, dass der Kaltstart-Mechanismus ausgefallen ist, wird dies bei der Differenzbildung in dem Kontroll-Baustein durch eine Überschreitung der Toleranz erkannt, wodurch ein Ausfall des Kaltstart-Mechanismus erkannt wird.

Die Sicherheitszeit wird von einer in dem Rechnersystem eingebauten Hardware-Komponente, insbesondere von einer Netzwerk-Karte ausgelesen. Nach der Abfrage der Sicherheitszeit wird diese auf einen Integer-Wert derart umgerechnet, dass eine Standard-Frequenz von 32,768 kHz nachgebildet wird.

In den Ablauf der Bildung der Standard-Zeiten wird in keiner Weise eingegriffen. Es arbeiten zwei voneinander unabhängige Timer, jeder wird von einem anderen Quarz erzeugt.

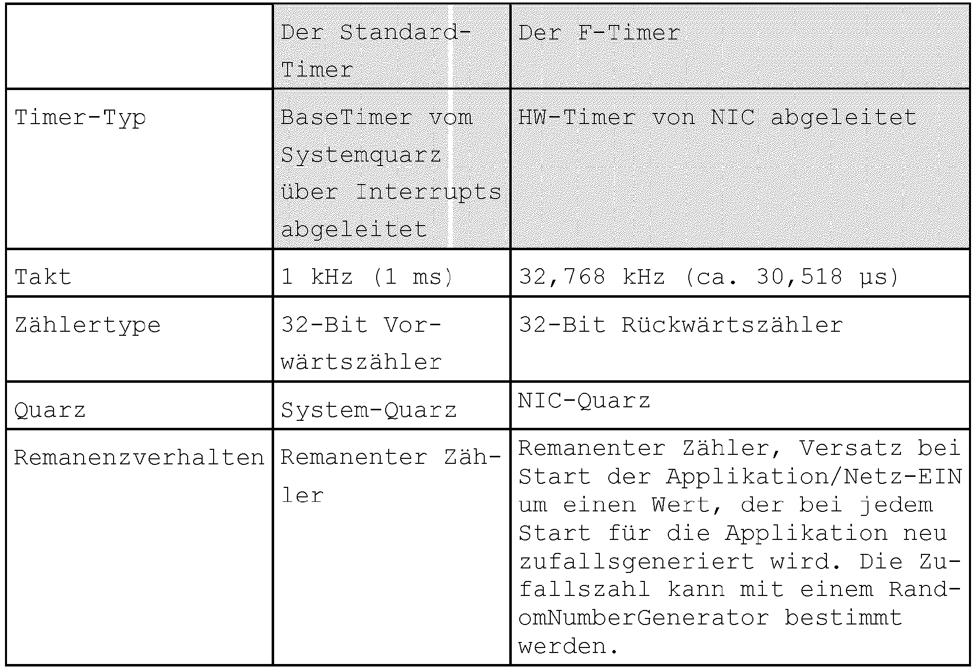

Auch wird die Aufgabe durch ein Rechnersystem umfassend eine Laufzeit-Umgebung, ausgestaltet eine zyklusorientierte Steuerungs-Software zur Steuerung eines Prozesses als Sicherheitssteuerung ablaufen zu lassen, einen Zufallsgenerator, einen Prozessor mit einer Systemzeit, eine Hardware-Komponente mit einer externen Zeit-Quelle zum Bereitstellen einer Sicherheitszeit, einem Speicherbereich, ausgestaltet zum Durchführen des Verfahrens nach einem der Ansprüche 1 bis 5.

Auf vorteilhafte Weise ist das Rechnersystem ausgestaltet als eine multifunktionale Steuerungsplattformen oder als ein Industrie-PCs oder als eine Edge-Computing-Plattform oder als eine Cloud-Computing-Plattformen.

Auf dem Rechnersystem ist die Steuerungs-Software als eine Sicherheitssteuerung mit einem Sicherheitsprogramm und einem Standard-Anwenderprogramm ausgestaltet.

Die Sicherheitssteuerung weist einen Kaltstart-Mechanismus auf, welcher ausgestaltet ist einen Anlauf der Sicherheitssteuerung nach einem Stromausfall am Rechnersystem durchzuführen, wobei der Kaltstart-Mechanismus ausgestaltet ist die Sicherheitssteuerung mit Initialwerten und nicht mit Aktualwerten des letzten Zyklus vorzubelegen, weiterhin aufweisend einen Kontroll-Baustein ausgestaltet einen Ausfall des Kaltstart-Mechanismus durch die Differenzbildung anhand einer Überschreitung der Toleranz zu erkennen.

Die Zeichnung zeigt ein Ausführungsbeispiel, dabei zeigt
- FIG 1: ein Rechnersystem auf dem eine Laufzeit-Umgebung für eine Steuerungssoftware untergebracht ist,
- FIG 2: ein Sicherheitsprogramm mit einem Kaltstartmechanismus,
- FIG 3: einen Kontrollbaustein zur Differenzbildung von Zeiten,
- FIG 4: das Prinzip des Zugriffes auf zwei unterschiedlichen Zeiten durch die Laufzeitumgebung,
- FIG 5: ein Diagramm zum Aufzeigen der zeitlichen Verläufe der Systemzeit und der Sicherheitszeit und
- FIG 6: das Prinzip einer Sicherheitssteuerung mit einer möglichen Aufrufreihenfolge.

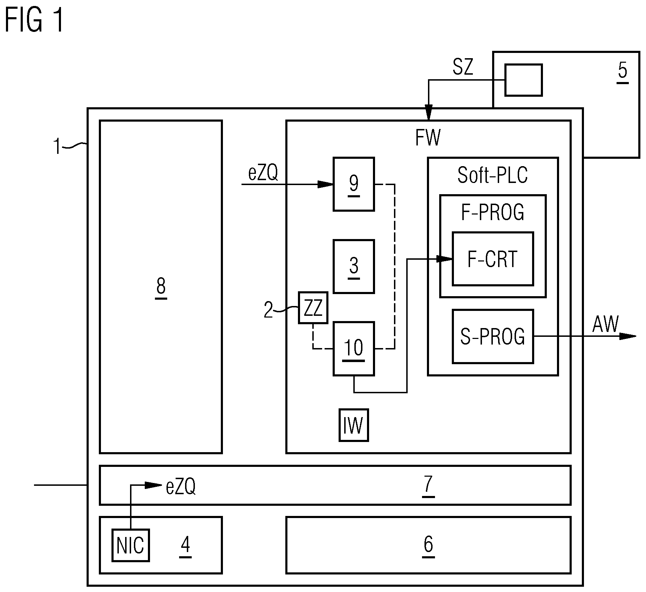

Gemäß FIG 1 ist ein Rechnersystem 1 dargestellt, das Rechnersystem 1 kann beispielsweise ein Industrie PC oder eine Edge -Computing-Plattform sein. In dem Rechnersystem 1 ist ein Hypervisor 7 installiert, welcher es ermöglicht, ein Betriebssystem 8, beispielsweise ein Windows Betriebssystem, neben einer Laufzeitumgebung FW zu betreiben. Die Laufzeitumgebung FW ist ausgestaltet, eine zyklusorientierte Steuerungs-Software SOFT-PLC zur Steuerung eines Prozesses als Sicherheitssteuerung ablaufen zu lassen. Die Steuerungs-Software SOFT-PLC ist mit einem Sicherheitsprogramm F-PROG und mit einem Standard-Anwenderprogramm S-PROG ausgestaltet. Für die Sicherheitssteuerung F-CPU ist es notwendig, dass zur Absicherung einer Systemzeit SZ des Rechnersystems 1 eine weitere von der Systemzeit SZ unabhängige Sicherheitszeit eZQ in jedem Zyklus Z abgefragt wird.

Ein Prozessor 5 des Rechnersystems stellt die Systemzeit SZ zur Verfügung. Die Sicherheitszeit eZQ wird von einer in dem Rechnersystem 1 eingebauten Hardwarekomponente 4, insbesondere einer Netzwerkkarte NIC, ausgelesen. Ein Abfragemittel 9 in der Laufzeitumgebung FW sorgt für eine ständige Abfrage der Sicherheitszeit eZQ. Zur Absicherung der Systemzeit SZ wird eine erste Zeitdifferenz S-Diff aus der Systemzeit SZ des Vorgängerzyklusses Zn-1 und eine zweite Zeitdifferenz F-Diff aus der Sicherheitszeit eZQ des aktuellen Zyklusses und der Sicherheitszeit eZQ des Vorgängerzyklusses Zn-1 gebildet. Ein Vergleich der Zeitdifferenzen S-Diff,F-Diff mit einer vorgegebenen Toleranz TOL wird durchgeführt, und für den Fall, dass die Abweichung der Zeitdifferenzen S-Diff,F-Diff die Toleranz TOL übersteigt, wird ein Fehlersignal generiert. Nun wurde also die verstrichene Zeit zwischen dem aktuellen und dem letzten Zyklus über die Zeitdifferenzen beider Timer ermittelt. Um nun zu erkennen, ob bei einem Anlauf nach einem Netz-Aus/-Ein sichergestellt ist, dass immer mit Initialwerten IW und nicht mit den Aktualwerten AW des letzten Sicherheitsprogramm-Zyklusses (z.B. vor Netz-Aus) angelaufen wird, wird bei einem Hochlauf der Laufzeit-Umgebung FW eine Zufallszahl ZZ erzeugt. Diese Zufallszahl ZZ wird in einem Speicherbereich 2 abgelegt, und bei jeder weiteren Abfrage der Sicherheitszeit eZQ wird die Zufallszahl ZZ auf diese aufaddiert. Zu Beginn eines neuen Zyklusses Zn in der Steuerungs-Software Soft-PLC wird in einem Kontrollbaustein F-CRT auf dem Speicherbereich 2 zugegriffen und vor der Berechnung der Zeitdifferenzen S-Diff,F-Diff wird die Zufallszahl ZZ aus der Sicherheitszeit eZQ in dem Kontroll-Baustein F-CRT wieder herausgerechnet. Die Zufallszahl ZZ wird mittels des Zufallsgenerators 3 generiert. Das Umrechnungsmittel 10 sorgt für das Aufaddieren der Zufallszahl ZZ auf die extern abgefragte Sicherheitszeit eZQ.

Bei den Sicherheitssteuerung nach dem Stand der Technik konnte bisher immer sichergestellt werden, dass das Verhalten der beiden Zeitgeber im Zustand "Netz-Aus" unterschiedlich ist, da sich beide auf einem Gerät befanden und die Zeitgeber durch den Hersteller definiert wurde.

Will man nun aber eine Steuerung mit einer Steuerungs-Software Soft-PLC auf einer beliebigen Plattform realisieren, so kann man zwar die zweite Zeit, z.B. von einer Netzwerkkarte NIC holen, aber diese Netzwerkkarte NIC weist ein nicht definiertes Verhalten in einem "Netz-Aus" auf. Um einen Ausfall eines Kaltstart-Mechanismus KM weiterhin zu gewährleisten, wird durch diese Lösung die Zufallszahl ZZ zum Wert der Sicherheitszeit eZQ addiert. Diese Zufallszahl ZZ wird einmalig bei jedem Hochlauf, beispielsweise nach einem Stromausfall gebildet.

Wenn der Kaltstart-Mechanismus KM funktioniert, wird bei der Differenzbildung der Zeiten die Zufallszahl ZZ herausgerechnet, sollte der Kaltstart-Mechanismus KM ausgefallen sein, wird mit zwei unterschiedlichen Zufallszahlen ZZ im Zyklus Z gerechnet, einmal mit der Zufallszahl ZZ vor "Netz-Aus" und einmal mit der neuen Zufallszahl ZZ nach "Netz-Ein" und somit kann die Abarbeitung des Sicherheitsprogramms F-PROG gestoppt werden, weil dies ein Indikator dafür ist, dass der Kaltstart-Mechanismus KM ausgefallen ist und die Aktualwerte AW nicht auf Initialwerte IW zurückgesetzt worden sind.

Das Rechnersystem 1 weist noch zusätzlich reservierte Hardware 6 speziell für die Sicherheitssteuerung F-CPU auf.

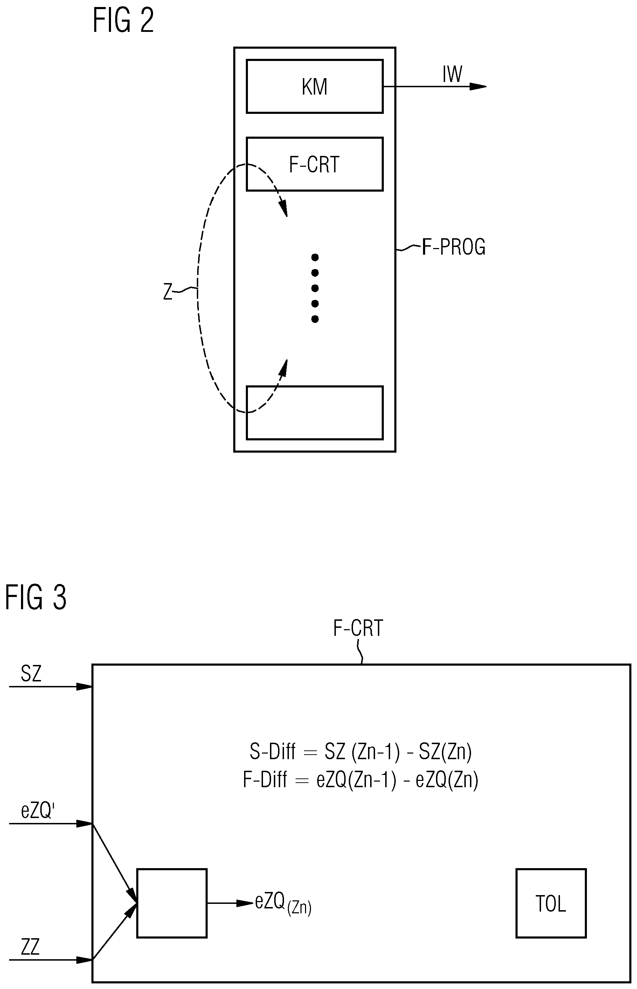

Mit der FIG 2 wird verdeutlicht, dass am Anfang eines Sicherheitsprogrammes F-PROG ein Kaltstart-Mechanismus KM durchgeführt wird, welcher die Aktualwerte AW zurücksetzt auf Initialwerte IW. Mit jedem Zyklus Z im Sicherheitsprogramm F-PROG wird durch den Kontrollbaustein F-CRT die Zeit neu berechnet.

FIG 3 zeigt den in dem Kontrollbaustein F-CRT implementierten Zeitberechnungs-Algorithmus auf. Der Kontrollbaustein F-CRT erhält als Eingangsgrößen die Systemzeit SZ, die Zufallszahl ZZ aus dem Speicherbereich 2 und die mit dem Umrechnungsmittel 10 umgerechnete Sicherheitszeit eZQ zu einer Sicherheitszeit eZQ' in den die Zufallszahl ZZ aufaddiert ist. In dem Kontrollbaustein F-CRT wird allerdings die Zufallszahl ZZ aus der Sicherheitszeit eZQ' wieder herausgerechnet und man erhält die Sicherheitszeit eZQ Zn). Nun werden die Differenzen S-Diff und F-Diff der jeweils alten und der neuen Zeit gebildet. Sollten die Differenzen eine Toleranz TOL überschreiten so wird ein Fehlersignal generiert.

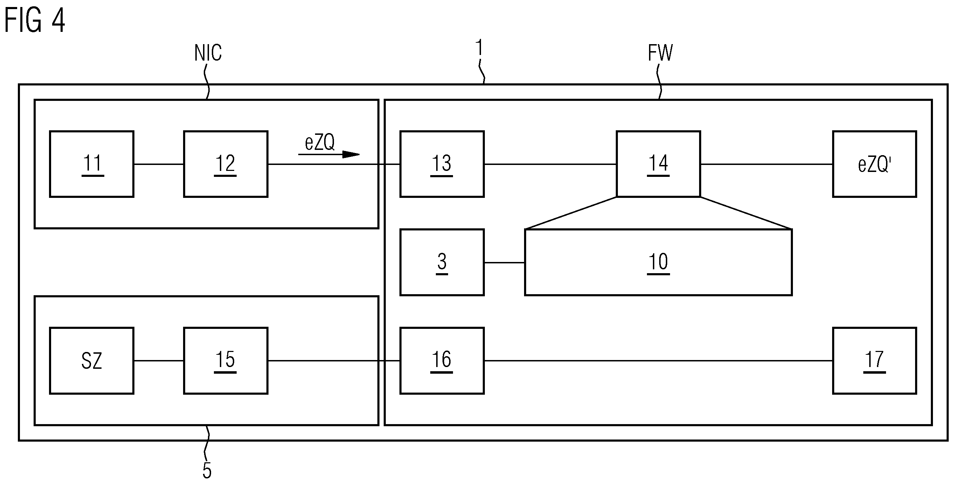

FIG 4 zeigt als Blockschaltbild die Veranschaulichung der unterschiedlichen Zeitbildungen. In der Laufzeitumgebung FW ist ein Systemaufruf 13, beispielsweise ein Linux-SysCall auf das Netzwerkartenregister der Netzwerkkarte NIC implementiert. Dieser Systemaufruf 13 holt von der Netzwerkkarte NIC kontinuierlich die Sicherheitszeit eZQ. Die Netzwerkkarte NIC stellt über eine lokale Uhrzeit 11 eine Zeitbasis zur Verfügung, wobei diese Zeitbasis über eine Normierung 12 auf eine normierten 64 Bit Zähler normiert wird. Dieser 64 Bit Zähler wird in Nanosekunden angegeben. In der Laufzeitumgebung FW ist der Zufallsgenerator 3 ebenfalls implementiert. Das Umrechnungsmittel 10 nimmt die durch den Zufallsgenerator 3 generierte Zufallszahl ZZ entgegen und wird mithilfe eines Zeitumrechners 14 die Zufallszahl ZZ in die Zeit einberechnen und zeitgleich wird diese berechnete Zeit auf eine Standardzeit von 32,768 kHz umgerechnet. So erhält man die mit der Zufallszahl ZZ beaufschlagte Sicherheitszeit eZQ'. Über einen Basis-Timer-Zugriff 16 wird der Laufzeitumgebung FW auf herkömmliche Art und Weise die Systemzeit SZ des Prozessors 5 zur Verfügung gestellt. Über einen Teiler 15 kann die Systemzeit SZ entsprechend den Vorgaben angepasst werden. Letztendlich wird dem Sicherheitsprogramm F-PROGund dem Anwenderprogramm S-PROG über einen Standard-Basis-Timer 17 die für die Steuerung des Prozesses notwendige Zeit zur Verfügung gestellt.

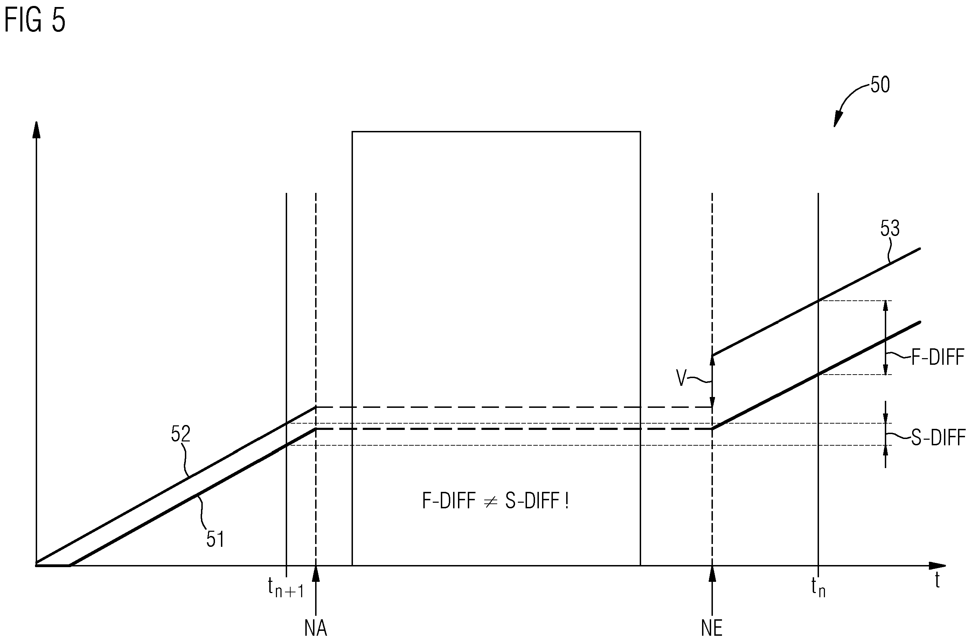

Mit der FIG 5 ist ein Diagramm 50 der zeitlichen Verläufe der Systemzeit SZ und der Sicherheitszeit eZQ dargestellt. Zu einem Startzeitpunkt laufen die Systemzeit SZ, dargestellt durch den zeitlichen Verlauf 51 und die Sicherheitszeit eZQ' dargestellt durch den zeitlichen Verlauf 52 los. Zu einem Zeitpunkt NA (Netz-Aus) fällt der Strom aus. In der Regel ist ein Prozessor bzw. dessen Systemzeit SZ so ausgestaltet, dass diese remanent ist. Das bedeutet nach Wiederkehr der Spannung bzw. nach Beendigung des Stromausfalles zum Zeitpunkt NE (Netz ein) läuft die Zeit mit dem letzten Wert weiter. Da das Verhalten der zusätzlich eingeholten Sicherheitszeit eZQ nicht bekannt ist bzw. in der Regel nicht remanent ist, hat man kein definiertes Verhalten und kann nicht sicherheitsgerecht darauf reagieren. Sollte nun beim Zeitpunkt NF (Netz ein) ein Kaltstart des Rechnersystems 1 durchgeführt werden, und zufälligerweise der Kaltstart-Mechanismus KM im Sicherheitsprogramm F-PROG nicht ausgeführt werden, so würde dies aufgedeckt werden durch einen Versatz V in der Zeitdifferenz F-Diff für die Sicherheitszeit eZQ. Der Versatz V ergibt sich aus der Differenz der neuen Zufallszahl ZZ-neu und der alten Zufallszahl ZZ-alt.

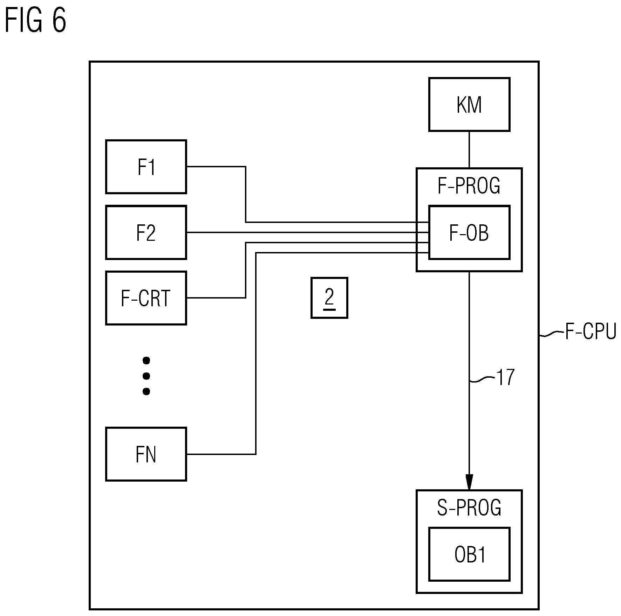

Die FIG 6 zeigt den prinzipiellen Ablauf beim Start einer Sicherheitssteuerung F-CPU. Zunächst wird der Kaltstart-Mechanismus KM durchgeführt. In dem Kaltstart-Mechanismus KM werden u.a. Anwenderdaten gelöscht sowie das aktuelle Prozessabbild der Eingänge und das aktuelle Prozessabbild der Ausgänge gelöscht. Remanente und nicht remanente Merker werden gelöscht. Zeiten und Zähler werden gelöscht. Alle DB's werden mit Initialwerten initialisiert. Während dieser Phase sind Peripherieausgänge in einen sicheren Zustand geschaltet.

Bei einem Kaltstart ist es insbesondere für eine Sicherheitssteuerungen F-CPU notwendig, dass mit Initialwerten IW gestartet wird. Danach startet das eigentliche Sicherheitsprogramm F-PROG aus einem Sicherheits-OB F-OB werden nach und nach unterschiedliche Sicherheitsbausteine F1,F2,F-CRT ... bis Fn aufgerufen. All diese Sicherheitsbausteine sorgen für die von der Sicherheitssteuerung F-CPU geforderte funktionale Sicherheit. In dem Kontrollbaustein F-CRT wird zur Absicherung der Systemzeit SZ auf die Sicherheitszeit eZQ eine Zufallszahl ZZ aufaddiert, sollte also der Kaltstart-Mechanismus KM ausgefallen sein, so wird später mit einem alten Wert im Speicherbereich 2 gerechnet und der Ausfall des Kaltstart-Mechanismus KM würde aufgedeckt werden. Im Sicherheitsprogramm F-PROG wird im Standard-Anwenderprogramm S-PROG eine Standard-Basis-Timerzeit 17 für den Aufruf eines OB1 zur Verfügung gestellt.

## Patentansprüche

1. Verfahren zum Betreiben einer zyklusorientierten Steuerungs-Software (Soft-PLC) zur Steuerung eines Prozesses, wobei die Steuerungs-Software (Soft-PLC) innerhalb einer Laufzeit-Umgebung (FW) auf einem Rechnersystem (1) zum Ablauf gebracht wird, wobei zur Absicherung einer Systemzeit (SZ) des Rechnersystems (1) eine weitere von der Systemzeit (SZ) unabhängige Sicherheitszeit (eZQ) in jedem Zyklus (Z) abgefragt wird, wobei eine erste Zeitdifferenz (S-Diff) aus der Systemzeit (SZ) des aktuellen Zyklus (Zn) und der Systemzeit (SZ) des Vorgänger Zyklus (Zn-1) und eine zweite Zeitdifferenz (F-Diff) aus der Sicherheitszeit (eZQ) des aktuellen Zyklus (Zn) und der Sicherheitszeit (eZQ) des Vorgänger Zyklus (Zn-1) gebildet wird und ein Vergleich der Zeitdifferenzen (S-Diff,F-Diff) mit einer vorgegebenen Toleranz (TOL) durchgeführt wird, und für den Fall dass die Abweichung der Zeitdifferenzen (S-Diff,F-Diff) die Toleranz (TOL) übersteigt wird ein Fehlersignal generiert,
**dadurch gekennzeichnet, dass** bei einem Hochlauf der Laufzeit-Umgebung (FW) eine Zufallszahl (ZZ) erzeugt wird, diese Zufallszahl (ZZ) wird in einem Speicherbereich (2) abgelegt und bei jeder weiteren Abfrage der Sicherheitszeit (eZQ) auf diese aufaddiert, wobei zu Beginn eines neuen Zyklus (Zn) in der Steuerungs-Software (Soft-PLC) in einem Kontroll-Baustein (F-CRT) die Abweichung der Zeitdifferenzen (S-Diff, F-Diff) berechnet wird, dabei wird in jedem Zyklus (Zn) von dem Kontroll-Baustein (F-CRT) auf den Speicherbereich (2) zugegriffen und vor der Berechnung der Zeitdifferenzen (S-Diff, F-Diff) wird die Zufallszahl (ZZ) aus der Sicherheitszeit (eZQ) in dem Kontroll-Baustein (F-CRT) wieder herausgerechnet, für den Fall dass ein neuer Hochlauf der Laufzeit-Umgebung (FW) erfolgt ist, wird dieses durch eine Überschreitung der Toleranz (TOL) diagnostizierbar, denn die zweite Zeitdifferenz (F-Diff) weist nun einen Versatz (V) auf, welcher aus der Sicherheitszeit (eZQ) mit einer neuen Zufallszahl (ZZ) des aktuellen Zyklus (Zn) und der Sicherheitszeit (eZQ) mit der alten Zufallszahl (ZZ) des Vorgänger Zyklus (Zn-1) ergibt.

2. Verfahren nach Anspruch 1, wobei die Steuerungs-Software (Soft-PLC) als eine Sicherheitssteuerung mit einem Sicherheitsprogramm (F-Prog) und einem Standard-Anwenderprogramm (S-Prog) betrieben wird und ungewollte Beeinflussung des Sicherheitsprogramms (F-Prog) aufgedeckt werden.

3. Verfahren nach Anspruch 2, wobei ein Kaltstart-Mechanismus (KM) beim Anlauf der Sicherheitssteuerung nach einem Stromausfall am Rechnersystem (1) durchgeführt wird, durch den Kaltstart-Mechanismus (KM) wird sichergestellt, dass immer mit Initialwerten (IW) und nicht mit Aktualwerten (AW) des letzten Zyklus angelaufen wird, wobei für den Fall, dass der Kaltstart-Mechanismus (KM) ausgefallen ist, wird dies bei der Differenzbildung in dem Kontroll-Baustein (F-CRT) durch eine Überschreitung der Toleranz (TOL) erkannt, wodurch ein Ausfall des Kaltstart-Mechanismus (KM) erkannt wird.

4. Verfahren nach einem der Ansprüche 1 bis 3, wobei die Sicherheitszeit (eZQ) von einer in dem Rechnersystem (1) eingebauten Hardware-Komponente, insbesondere einer Netzwerk-Karte (NIC), ausgelesen wird.

5. Verfahren nach einem der Ansprüche 1 bis 4, wobei nach der Abfrage der Sicherheitszeit (eZQ) diese auf einen Integer-Wert derart umgerechnet wird, dass eine Standard-Frequenz von 32,768 kHz von nachgebildet wird.

6. Rechnersystem (1) umfassend eine
Laufzeit-Umgebung (FW) ausgestaltet eine zyklusorientierte Steuerungs-Software (Soft-PLC) zur Steuerung eines Prozesses ablaufen zu lassen,
einen Zufallsgenerator (3),
einen Prozessor (5) mit einer Systemzeit (SZ),
eine Hardware-Komponente (4) mit einer externen Zeit-Quelle zum Bereitstellen einer Sicherheitszeit (eZQ),
einem Speicherbereich (2), ausgestaltet zum Durchführen des Verfahrens nach einem der Ansprüche 1 bis 5.

7. Rechnersystem (1) nach Anspruch 6, ausgestaltet als eine multifunktionale Steuerungsplattformen oder als ein Industrie-PCs oder als eine Edge-Computing-Plattform oder als eine Cloud-Computing-Plattform.

8. Rechnersystem (1) nach Anspruch 6 oder 7, wobei die Steuerungs-Software (Soft-PLC) eine Sicherheitssteuerung mit einem Sicherheitsprogramm (F-Prog) und einem Standard-Anwenderprogramm (S-Prog) aufweist.

9. Rechnersystem (1) nach einem der Ansprüche 6 bis 8, wobei die Sicherheitssteuerung einen Kaltstart-Mechanismus (KM) aufweist, welcher ausgestaltet ist einen Anlauf der Sicherheitssteuerung nach einem Stromausfall am Rechnersystem (1) durchzuführen, wobei der Kaltstart-Mechanismus (KM) ausgestaltet ist die Sicherheitssteuerung mit Initialwerten (IW) und nicht mit Aktualwerten (AW) des letzten Zyklus vorzubelegen, weiterhin aufweisend einen Kontroll-Baustein (F-CRT) ausgestaltet einen Ausfall des Kaltstart-Mechanismus (KM) durch die Differenzbildung anhand einer Überschreitung der Toleranz (TOL) zu erkennen.

## Claims

1. Method for operating a piece of cycle-oriented control software (Soft-PLC) for controlling a process, wherein the control software (Soft-PLC) is caused to run on a computer system (1) within a runtime environment (FW), wherein in order to secure a system time (SZ) of the computer system (1), a further safety time (eZQ) independent of the system time (SZ) is requested in each cycle (Z), wherein a first time difference (S-Diff) is formed from the system time (SZ) of the current cycle (Zn) and the system time (SZ) of the previous cycle (Zn-1) and a second time difference (F-Diff) is formed from the safety time (eZQ) of the current cycle (Zn) and the safety time (eZQ) of the previous cycle (Zn-1) and a comparison of the time differences (S-Diff, F-Diff) with a pre-determined tolerance (TOL) is carried out and, in the event that the deviation of the time differences (S-Diff, F-Diff) exceeds the tolerance (TOL), an error signal is generated,
**characterised in that** on a start-up of the runtime environment (FW), a random number (ZZ) is generated, this random number (ZZ) is stored in a storage region (2) and on every further request for the safety time (eZQ) is added thereto, wherein at the start of a new cycle (Zn) in the control software (Soft-PLC), in a control component (F-CRT), the deviation between the time differences (S-Diff, F-Diff) is calculated, and therein in each cycle (Zn) the storage region (2) is accessed by the control component (F-CRT) and, before the calculation of the time differences (S-Diff, F-Diff), the random number (ZZ) is subtracted out of the safety time (eZQ) in the control component (F-CRT) again, for the eventuality that a new start-up of the runtime environment (FW) has taken place, this can be diagnosed by an exceeding of the tolerance (TOL), since the second time difference (F-Diff) now has an offset (V) which is given by the safety time (eZQ) with a new random number (ZZ) of the current cycle (Zn) and the safety time (eZQ) with the old random number (ZZ) of the previous cycle (Zn-1).

2. Method according to claim 1, wherein the control software (Soft-PLC) is operated as a fail-safe control system with a safety program (F-Prog) and a standard user program (S-Prog) and unwanted influencing of the safety program (F-Prog) can be revealed.

3. Method according to claim 2, wherein a cold start mechanism (KM) is carried out on the computer system (1) during a start-up of the fail-safe control system after a power failure and it is ensured by the cold start mechanism (KM) that the start-up always takes place with initial values (IW) and not with current values (AW) of the last cycle, wherein in the event that the cold start mechanism (KM) has failed, this is recognised during the difference calculation in the control component (F-CRT) by way of an exceeding of the tolerance (TOL), so that a failure of the cold start mechanism (KM) is recognised.

4. Method according to one of claims 1 to 3, wherein the safety time (eZQ) is read out by a hardware component, in particular, a network card (NIC) installed in the computer system (1).

5. Method according to one of claims 1 to 4, wherein after the request for the safety time (eZQ), this is converted to an integer value in that a standard frequency of 32.768 kHz is replicated.

6. Computer system (1) comprising a
runtime environment (FW) configured to cause a piece of cycle-oriented control software (Soft-PLC) to run to control a process,
a random number generator (3),
a processor (5) with a system time (SZ),
a hardware component (4) with an external time source for providing a safety time (eZQ),
a storage region (2), configured to carry out the method according to one of claims 1 to 5.

7. Computer system (1) according to claim 6, configured as a multifunctional control platform or as an industry PC or as an edge computing platform or as a cloud computing platform.

8. Computer system (1) according to claim 6 or 7, wherein the control software (Soft-PLC) has a fail-safe control system with a safety program (F-Prog) and a standard user program (S-Prog) .

9. Computer system (1) according to one of claims 6 to 8, wherein the fail-safe control system has a cold start mechanism (KM) which is configured to carry out a start-up of the fail-safe control system after a power failure on the computer system (1), wherein the cold start mechanism (KM) is configured to pre-configure the fail-safe control system with initial values (IW) and not with current values (AW) of the last cycle, further having a control component (F-CRT) configured to recognise a failure of the cold start mechanism (KM) by way of the difference calculation on the basis of an exceeding of the tolerance (TOL).

## Revendications

1. Procédé pour faire fonctionner un logiciel (Soft-PLC) de commande par cycle pour la commande d'un processus, dans lequel on met en déroulement le logiciel (Soft-PLC) de commande dans un environnement (FW) de temps d'exécution sur un système (1) d'ordinateur, dans lequel, pour sécuriser un temps (SZ) de système du système (1) d'ordinateur, on demande dans chaque cycle (Z) un autre temps (eZQ) de sécurité indépendant du temps (SZ) de système, dans lequel on forme une première différence (S-Diff) de temps entre le temps (SZ) de système du cycle (Zn) en cours et le temps (SZ) de système du cycle (Zn-1) précédent et une deuxième différence (F-Diff) de temps entre le temps (eZQ) de sécurité du cycle (Zn) en cours et le temps (eZQ) de sécurité du cycle (Zn-1) précédent et on effectue une comparaison entre les différences (S-Diff, F-Diff) de temps avec une tolérance (TOL) donnée à l'avance, et dans le cas où l'écart entre les différences (S-Diff, F-Diff) de temps dépasse la tolérance (TOL), on crée un signal d'erreur, **caractérisé en ce que** l'on produit, lors d'un démarrage de l'environnement (FW) de temps d'exécution, un nombre (ZZ) aléatoire, on met ce nombre (ZZ) aléatoire dans une partie (2) de mémoire et, à chaque autre demande de temps (eZQ) de sécurité, on l'y ajoute, dans lequel, au début d'un cycle (Zn) nouveau dans le logiciel (Soft-PLC) de commande, on calcule dans un module (F-CRT) de contrôle l'écart entre les différences (S-Diff, F-Diff) de temps, on accède alors dans chaque cycle (Zn) par le module (F-CRT) de contrôle à la partie (2) de mémoire et avant le calcul des différences (S-Diff, F-Diff), on recalcule dans le module (F-CRT) de contrôle le nombre (ZZ) aléatoire à partir du temps (eZQ) de sécurité dans le cas où un démarrage nouveau de l'environnement (FW) de temps d'exécution est effectué, celui-ci peut être diagnostiqué par un dépassement de la tolérance (TOL), car la deuxième différence (F-Diff) de temps a alors un décalage (V), qui provient du temps (eZQ) de sécurité avec un nombre (ZZ) aléatoire nouveau du cycle (Zn) en cours et du temps (eZQ) de sécurité avec le nombre (ZZ) aléatoire antérieur du cycle (Zn-1) précédent.

2. Procédé suivant la revendication 1, dans lequel on fait fonctionner le logiciel (Soft-PLC) de commande en commande de sécurité ayant un programme (F-Prog) de sécurité et un programme (S-Prog) d'utilisateur standard et on découvre une influence intempestive du programme (F-Prog) de sécurité.

3. Procédé suivant la revendication 2, dans lequel on effectue un mécanisme (KM) de départ à froid lors du démarrage de la commande de sécurité après une panne de courant sur le système (1) d'ordinateur, on s'assure, par le mécanisme (KM) de départ à froid, que l'on démarre toujours avec des valeurs (IW) initiales et non avec des valeurs (AW) en cours du dernier cycle, dans lequel, dans le cas où le mécanisme (KM) de départ à froid tombe en panne, cela est identifié lors de la formation de différences dans le module (F-CRT) de contrôle par un dépassement de la tolérance (TOL), grâce à quoi on identifie une panne du mécanisme (KM) de départ à froid.

4. Procédé suivant l'une des revendications 1 à 3, dans lequel on lit le temps (eZQ) de sécurité par un composant matériel incorporé dans le système (1) d'ordinateur, en particulier par une carte (NIC) de réseau.

5. Procédé suivant l'une des revendications 1 à 4, dans lequel après la demande du temps (eZQ) de sécurité, on le transforme en un nombre entier, de manière à simuler une fréquence standard de 32,768 kHz.

6. Système (1) d'ordinateur comprenant
un environnement (FW) de temps d'exécution conformé pour faire se dérouler un logiciel (Soft-PLC) de sécurité à cycle pour la commande d'un processus,
un générateur (3) de nombres aléatoires,
un processeur (5) ayant un temps (SZ) de système,
un composant (4) en matériel ayant une source extérieure de temps pour disposer d'un temps (eZQ) de sécurité,
une partie (2) de mémoire conformée pour exécuter le procédé suivant l'une des revendications 1 à 5.

7. Système (1) d'ordinateur suivant la revendication 6, conformé en plateformes de commande multifonctionnelles ou en PC d'industrie ou en plateforme edge-computting ou en plateforme cloud-computting.

8. Système (1) d'ordinateur suivant la revendication 6 ou 7, dans lequel le logiciel (Soft-PLC) de commande a une commande de sécurité ayant un programme (F-Prog) de sécurité et un programme (S-Prog) d'utilisateur standard.

9. Système (1) d'ordinateur suivant l'une des revendications 6 à 8, dans lequel la commande de sécurité a un mécanisme (KM) de départ à froid, qui est conformé de manière à effectuer un démarrage de la commande de sécurité après une panne de courant sur le système (1) d'ordinateur, dans lequel le mécanisme (KM) de départ à froid est conformé pour charger à l'avance la commande de sécurité de valeurs (IW) initiales et non des valeurs (AW) en cours du dernier cycle, comportant en outre un module (F-CRT) de commande conformé pour identifier, à l'aide d'un dépassement de la tolérance (TOL) par la formation de différences, une panne du mécanisme (KM) de départ à froid.
